# EUROPEAN PATENT APPLICATION

(11) **EP 3 451 720 A1**
(43) Date of publication of application: **06.03.2019**
(21) Application number: 16905097.8
(22) Date of filing: 17.06.2016
(51) Int. Cl.: H04W 8/26

(54) **IDENTIFICATION MANAGEMENT METHOD, DEVICE, AND SYSTEM**

(71) Applicant: Huawei Technologies Co., Ltd., Longgang District Shenzhen, Guangdong 518129 (CN)
(72) Inventor: LI, Guanchen, Shenzhen Guangdong 518129 (CN); LIU, Wei, Shenzhen Guangdong 518129 (CN)
(74) Representative: Maiwald Patent- und Rechtsanwaltsgesellschaft mbH
(86) International application number: PCT/CN2016/086264
(87) International publication number: WO 2017/214983

(57) **Abstract**

Embodiments of the present invention provide an identifier management method, applied to a multi-carrier communications system. The multi-carrier communications system includes a first carrier and a second carrier; a first terminal accesses a wireless network by using a first network device in which the first carrier is located, and is allocated with a radio network temporary identifier C-RNTI; and the method includes: receiving, by a second network device in which the second carrier is located, a request message sent by the first network device, where the request message is used to request the second network device to allocate the C-RNTI to the first terminal; and when the C-RNTI is allocated by the second network device to a second terminal, allocating, by the second network device, the C-RNTI the same as the C-RNTI of the second terminal to the first terminal, and staggering a communication resource used by the first terminal on the second carrier and a communication resource used by the second terminal on the second carrier. According to the foregoing method, a terminal can implement normal communication of the terminal without changing a C-RNTI, thereby avoiding poor user experience due to a service interruption.

## Description

### TECHNICAL FIELD

The present invention relates to wireless communications technologies, and in particular, to an identifier related method, an apparatus, and a system.

### BACKGROUND

With development of mobile communications and broadband wireless access technologies, mobile communications services and broadband wireless access services interpenetrate each other. To meet a requirement on broadband mobile communications and address a challenge of broadband mobile communications, a carrier aggregation (carrier aggregation, CA) technology is introduced to a mobile communications system.

In the CA technology, a larger bandwidth is obtained by aggregating a plurality of continuous or discontinuous component carriers (component carrier, CC), thereby improving a system data transmission rate and a system throughput, and resolving a problem of discontinuity of operator frequency spectra.

For a terminal having a CA capability, a plurality of aggregated CCs include one primary component carrier (primary component carrier, PCC) that corresponds to a primary cell (primary cell, Pcell), and at least one secondary component carrier (secondary component carrier, SCC) that corresponds to a secondary cell (secondary cell, Scell). Each aggregated CC is used for data transmission by the terminal. Therefore, cell-radio network temporary identifiers (cell-radio network temporary identifier, C-RNTI) used by the terminal on the aggregated CCs need to be the same.

During carrier aggregation, when a terminal accesses a PCC, a C-RNTI is to be allocated to the terminal on the PCC. When an SCC is configured or activated, the allocated C-RNTI on the PCC is notified to the SCC, so that the C-RNTI is allocated to the terminal on the SCC. However, the SCC may be used as a serving cell of another terminal, and the C-RNTI may be allocated to the another terminal. To be specific, the C-RNTI allocated to the terminal on the PCC is already allocated to the another terminal on the SCC. In this case, a C-RNTI needs to be reallocated to a terminal, leading to a service interruption of the terminal and poor user experience.

### SUMMARY

Embodiments of the present invention provide an identifier management method, to improve user experience.

According to an aspect, an embodiment of this application provides an identifier management method, applicable to a multi-carrier communications system. The multi-carrier communications system includes a first carrier and a second carrier; a first terminal accesses a wireless network by using a first network device in which the first carrier is located, and is allocated with a radio network temporary identifier C-RNTI; and the method includes: receiving, by a second network device in which the second carrier is located, a request message sent by the first network device, where the request message is used to request the second network device to allocate the C-RNTI to the first terminal; and when the C-RNTI is allocated by the second network device to a second terminal, allocating, by the second network device, the C-RNTI which is the same as the C-RNTI of the second terminal to the first terminal, and staggering a communication resource used by the first terminal on the second carrier and a communication resource used by the second terminal on the second carrier.

Based on the foregoing aspect, this application further provides the following possible designs:
In a possible design, the second network device sends a first notification message to the first network device, where the first notification message is used to instruct the first network device to start cross-carrier scheduling for the first terminal, and the cross-carrier scheduling includes: the first network device sends the first terminal's control information of the second carrier to the first terminal on a control channel of the first carrier. In this way, the first terminal and the second terminal can distinguish between their control information by using different carriers, thereby avoiding interference from each other, and avoiding a communication error.

The control information of the first terminal on the second carrier that is mentioned in the foregoing design may include information indicating the first terminal a location of a data channel of the second carrier.

In a possible design, the staggering, by the second network device, a communication resource used by the first terminal on the second carrier and a communication resource used by the second terminal on the second carrier may include: scheduling, by the second network device, the first terminal in a first scheduling period, and scheduling the second terminal in a second scheduling period, where the first scheduling period is different from the second scheduling period.

Based on the foregoing design, the method further includes: sending, by the second network device, a first indication message to the first network device, where the first indication message is used to instruct the first network device to send the first terminal's control information of the second carrier to the first terminal on the control channel of the first carrier. The first indication message may be sent based on that the second network device configures the first scheduling period for the first terminal, for example, sent in real time after the first scheduling period is configured.

In a possible design, the staggering, by the second network device, a communication resource used by the first terminal on the second carrier and a communication resource used by the second terminal on the second carrier may include: transmitting, by a second network device, data to the first terminal by using a first resource area, and transmitting data to the second terminal by using a second resource area, where the first resource area is different from the second resource area. The second network device may obtain the first resource area and the second resource area through division based on a frequency domain, a time domain, or a frequency domain and a time domain, and respectively allocate the first resource area and the second resource area to the first terminal and the second terminal. Herein, a resource area may include at least one physical resource block or physical resource block pair.

Based on the foregoing design, the method further includes: sending, by the second network device, a second indication message to the first network device, where the second indication message is used to instruct the first network device to send the first terminal's control information of the second carrier to the first terminal on the control channel of the first carrier, and comprises information indicating the first resource area. The information indicating the first resource area may include frequency band information, time period information, or frequency band information and time period information based on a specific manner of obtaining a resource area through division by the second network device.

In a possible design, the first notification message in the foregoing design is further used to notify the C-RNTI used by the first terminal and the second terminal.

In a possible design, the second network device sends a second notification message to the first network device, where the second notification message is used to notify the same C-RNTI used by the first terminal and the second terminal.

In a possible design, the second network device may include, in the first notification message or the second notification message, a specific manner of staggering the communication resources used by the first terminal and the second terminal on the second carrier, and send the first notification message or the second notification message to the first network device. The advantage is as follows: The first network device is notified of the solution as soon as possible, and it is advantageous for the first network device to coordinate subsequent scheduling arrangement on the first carrier.

According to another aspect, an embodiment of the present invention provides another identifier management method, applicable to a multi-carrier communications system. The multi-carrier communications system includes a first carrier and a second carrier; a first terminal accesses a wireless network by using a first network device in which the first carrier is located, and is allocated with a radio network temporary identifier C-RNTI; and the method includes: sending, by the first network device, a request message to a second network device in which the second carrier is located, where the request message is used to request the second network device to allocate the C-RNTI to the first terminal; and when the first terminal uses the C-RNTI which is the same as a second terminal on the second carrier, receiving, by the first network device, an indication message sent by the second network device, where the indication message is used to instruct the first network device to send the first terminal's control information of the second carrier to the first terminal on a control channel of the first carrier, and a communication resource used by the first terminal on the second carrier and a communication resource used by the second terminal on the second carrier are staggered.

Based on the foregoing aspect, this application further provides the following possible designs:
In a possible design, the first network device receives a first notification message sent by the second network device, where the first notification message is used to instruct the first network device to start cross-carrier scheduling for the first terminal, and the cross-carrier scheduling includes: the first network device sends the first terminal's control information of the second carrier to the first terminal on the control channel of the first carrier. In this way, the first terminal and the second terminal can distinguish between their control information by using different carriers, thereby avoiding interference from each other, and avoiding a communication error.

The control information of the first terminal on the second carrier that is mentioned in the foregoing design may include information indicating the first terminal a location of a data channel of the second carrier.

In a possible design, that a communication resource used by the first terminal on the second carrier and a communication resource used by the second terminal on the second carrier are staggered includes: a scheduling period of the first terminal is different from a scheduling period of the second terminal.

In a possible design, that a communication resource used by the first terminal on the second carrier and a communication resource used by the second terminal on the second carrier are staggered includes: a resource area used by the first terminal is different from a resource area used by the second terminal. Different resource areas may be obtained through division based on a frequency domain, a time domain, or a frequency domain and a time domain.

In a possible design, the notification message in the foregoing design is further used to notify the C-RNTI used by the first terminal and the second terminal.

In a possible design, the first network device receives a second notification message sent by the second network device, where the second notification message is used to notify the C-RNTI used by the first terminal and the second terminal.

According to another aspect, an embodiment of the present invention provides a network device. The network device has a function of implementing an operation of the first network device or the second network device in the foregoing method designs. The function may be implemented by hardware, or may be implemented by executing corresponding software by hardware. The hardware or software includes one or more units corresponding to the foregoing function.

In a possible design, a structure of the network device includes a processor, a transmitter, and an interface unit. The processor is configured to support performing a corresponding function in the foregoing methods by the network device. The transmitter is configured to support communication between the network device and a terminal. The interface unit is configured to: instruct the network device to communicate with another network device, and send a message or an instruction used in the foregoing methods to the another network device. The network device may further include a memory. The memory is configured to couple with the processor, and stores a program instruction and data that are required by a base station.

According to still another aspect, an embodiment of the present invention provides a communications system. The system includes the first network device and the second network device according to the foregoing aspects.

According to yet another aspect, an embodiment of the present invention provides a computer storage medium, configured to store a computer software instruction used by the foregoing second network device, and including a program designed to perform the foregoing aspects.

According to yet another aspect, an embodiment of the present invention provides a computer storage medium, configured to store a computer software instruction used by the foregoing first network device, and including a program designed to perform the foregoing aspects.

According to yet another aspect, an embodiment of the present invention provides a chip system, including: at least one processor, a memory, an input/output part, and a bus. The at least one processor obtains an instruction in the memory by using the bus, to implement a designed function of the second network device in the foregoing method designs.

According to yet another aspect, an embodiment of the present invention provides a chip system, including: at least one processor, a memory, an input/output part, and a bus. The at least one processor obtains an instruction in the memory by using the bus, to implement a designed function of the first network device in the foregoing method designs.

In the technical solutions provided in the embodiments of the present invention, when the first carrier as a PCC is aggregated with the second carrier as an SCC for the terminal, when the C-RNTI corresponding to the terminal is already occupied on the second carrier, a network device in which the SCC is located multiplexes the C-RNTI for the terminal and another terminal, and staggers communication resources of the terminal and the another terminal on the second carrier. Different from the prior art, in the technical solutions, a terminal can implement normal communication of the terminal without changing a C-RNTI, thereby avoiding poor user experience due to a service interruption.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a system architectural diagram according to an embodiment of the present invention;
FIG. 2(a) shows an example of carrier aggregation according to an embodiment of the present invention;
FIG. 2(b) shows another example of carrier aggregation according to an embodiment of the present invention;
FIG. 2(c) shows another example of carrier aggregation according to an embodiment of the present invention;
FIG. 3 is a schematic diagram of a C-RNTI conflict according to an embodiment of the present invention;
FIG. 4 is a schematic flowchart of an identifier management method according to an embodiment of the present invention;
FIG. 5 is a schematic diagram of a basic principle of cross-carrier scheduling according to an embodiment of the present invention;
FIG. 6 is a schematic structural diagram of a network device according to an embodiment of the present invention; and
FIG. 7 is another schematic structural diagram of a network device according to an embodiment of the present invention.

### DESCRIPTION OF EMBODIMENTS

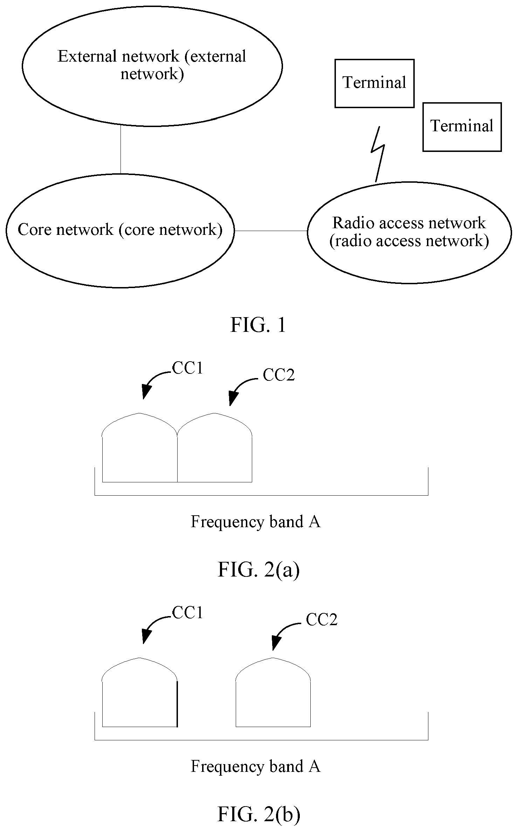

FIG. 1 is a system architectural diagram according to an embodiment of the present invention. As shown in FIG. 1, a terminal accesses an external network (external network) by using a radio access network (radio access network, RAN) and a core network (core network, CN). A technology described in the present invention is applicable to other wireless communications systems using various radio access technologies, for example, systems using access technologies such as Code Division Multiple Access, Frequency Division Multiple Access, Time Division Multiple Access, Orthogonal Frequency Division Multiple Access, and Single Carrier Frequency Division Multiple Access, and subsequently evolved system such as a fifth generation 5G system.

In this application, nouns "network" and "system" are often used interchangeably, but a person skilled in the art may understand their meanings. For clear description, herein, a Long Term Evolution (long term evolution, LTE) system is used as an example for description. In the LTE system, an evolved UMTS terrestrial radio access (evolved universal terrestrial radio access, E-UTRA) network is used as a radio access network, and an evolved packet core (evolved packet core, EPC) is used as a core network.

In embodiments of the present invention, a network device may be an apparatus deployed in the radio access network and configured to provide a wireless communication function to a terminal. The network device may include macro base stations, micro base stations, relay stations, and access points in various forms. In systems using different radio access technologies, names of devices having a function of a base station may be different. For example, in an LTE system, the device is referred to as an evolved NodeB (evolved NodeB, eNodeB). The terminal may include various handheld devices having a wireless communication function, an in-vehicle device, a wearable device, a computing device, another processing device connected to a wireless modem, mobile stations (mobile station, MS) in various forms, user equipment (user equipment, UE), and the like.

In addition, a control channel in this application may be a physical downlink control channel (physical downlink control channel, PDCCH) in the LTE system, and a data channel in this application may be a physical downlink shared channel (physical downlink shared channel, PDSCH) or a physical uplink shared channel (physical uplink shared channel, PUSCH) in the LTE system.

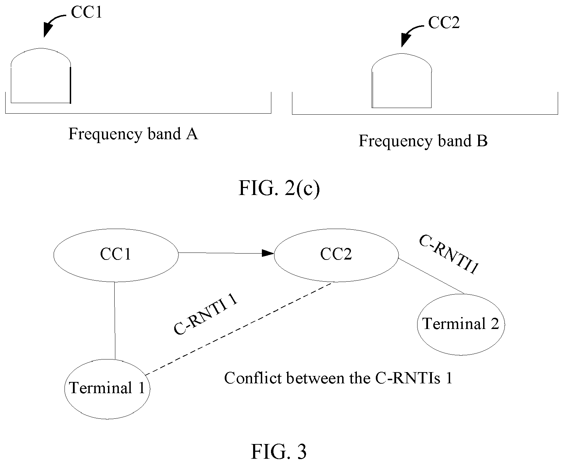

The embodiments of the present invention are applicable to a CA technology. FIG. 2(a), FIG. 2(b), and FIG. 2(c) show three examples of CA. In FIG. 2(a), in a frequency band A, a frequency band 1 and a frequency band 2, respectively as a CC 1 and a CC 2, are aggregated, and the frequency band 1 and the frequency band 2 are continuous. In FIG. 2(b), in a frequency band A, a frequency band 1 and a frequency band 2, respectively as a CC 1 and a CC 2, are aggregated, and the frequency band 1 and the frequency band 2 are discontinuous. In FIG. 2(c), a frequency band 1, in a frequency band A, as a CC 1 and a frequency band 2, in a frequency band B, as a CC 2 are aggregated. Certainly, aggregation of only two CCs is used as an example above. Actually, CAmay also include aggregation of more than two CCs. Details are not described herein.

In the CA technology, a plurality of aggregated CCs may be managed by using a same network device, or may be separately managed by using different network devices. Specifically, it is assumed that there are two CCs that are respectively a CC 1 and a CC 2. In the embodiments of the present invention relates to interaction between the two CCs, interaction between a CC and a terminal. Executing body for method operations of a CC is discussed in following several cases:

When the CC 1 and the CC 2 are managed by different network devices, a method operation of the CC 1 may be performed by a first network device in which the CC 1 is located, and a method operation of the CC 2 may be performed by a second network device in which the CC 2 is located. When the CC 1 and the CC 2 are managed by a same network device, a method operation of the CC 1 may be performed by a baseband processing board that is included in the network device and that manages the CC 1, and a method operation of the CC 2 may be performed by a baseband processing board that is included in the network device and that manages the CC 2. When the CC 1 and the CC 2 are managed by a same baseband processing board included in a same network device, a method operation of the CC 1 may be performed by a processor controlling the CC 1, and a method operation of the CC 2 may be performed by a processor controlling the CC 2. It should be noted that, in the embodiments of the present invention, regardless of any one of the foregoing cases, it may be considered that a method of the CC 1 is performed by the first network device in which the CC 1 is located, and a method of the CC 2 is performed by the second network device in which the CC 2 is located. When a same network device performs management, the first network device and the second network device are a same network device.

A C-RNTI is an identifier added to a header of a Media Access Control (media access control, MAC) packet data unit (packet data unit, PDU), and is used to identify radio resource control (radio resource control, RRC) and scheduling. Currently, a length of the C-RNTI is 16 bits, and a value range of the C-RNTI is 0 to 65535.

In a CA scenario, a PCC and an SCC are both used for data transmission by a same terminal, and C-RNTIs used by the terminal need to be the same. A C-RNTI of the terminal is allocated by a network device in which the PCC is located to the terminal when the terminal accesses the PCC. As shown in FIG. 3, a CC 1 as a PCC is to be aggregated with a CC 2 as an SCC for a terminal 1. When the CC 2 is activated, for the terminal 1, a C-RNTI 1 allocated on the CC 1 needs to be used on the CC 2, but the C-RNTI 1 may be already allocated to a terminal 2 on the CC 2. Consequently, a C-RNTI conflict occurs between the two terminals. In this case, a C-RNTI needs to be reallocated to the terminal 1 or the terminal 2, leading to a service interruption of the terminal and poor user experience.

For example, after the C-RNTI conflict occurs, in the prior art, a new C-RNTI is changed for the terminal 1 or the terminal 2 through a cell handover. However, in such a manner, an interruption of a current service of the terminal 1 or the terminal 2 is caused, and user experience is poor.

In consideration of the foregoing problem, when a C-RNTI conflict occurs, in the embodiments of this application, a C-RNTI is multiplexed by the two terminals instead of reallocating a new C-RNTI to a terminal, and on CCs on which the C-RNTI is multiplexed, data transmission by the two terminals is ensured by staggering resources.

The following describes in detail the embodiments of this application with reference to the accompanying drawings.

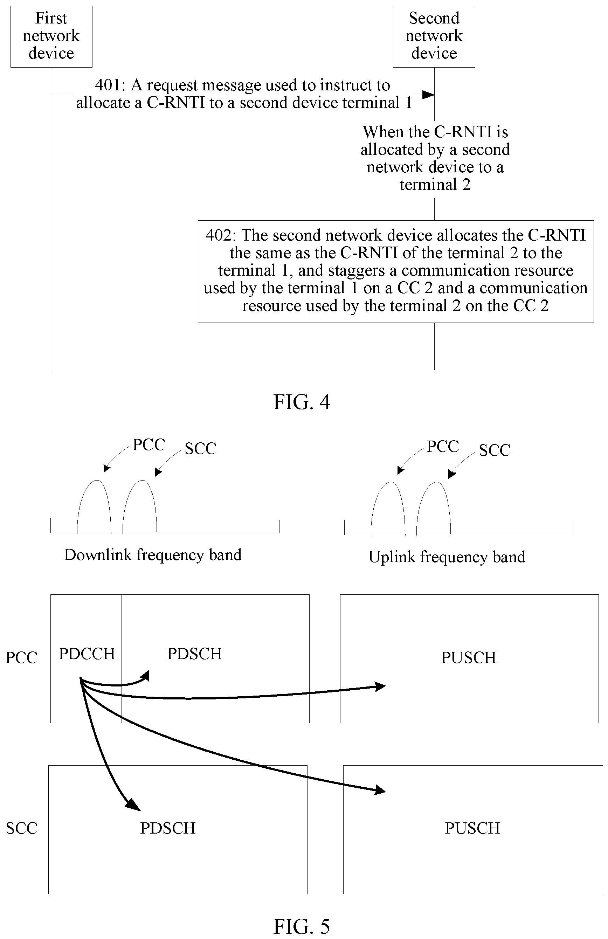

FIG. 4 provides a schematic flowchart of an identifier management method, applied to a multi-carrier communications system. The communications system includes a CC 1 and a CC 2, and a terminal 1 accesses a wireless network by using a first network device in which the CC 1 is located, and is allocated with a C-RNTI.

The method is applicable to the system architecture shown in FIG. 1, the CAtechnologies shown in FIG. 2(a), FIG. 2(b), and FIG. 2(c), and the application scenario shown in FIG. 3. The method includes the following steps:
401: The first network device sends a request message to a second network device in which the CC 2 is located, where the request message is used to request the second network device to allocate the C-RNTI, that is, the C-RNTI allocated by the first network device to the terminal on the CC 1, to the terminal 1.
402: When the C-RNTI is allocated by the second network device to a terminal 2, the second network device allocates the C-RNTI the same as the C-RNTI of the terminal 2 to the terminal 1, and staggers a communication resource used by the terminal 1 on the CC 2 and a communication resource used by the terminal 2 on the CC 2.

In this embodiment of the present invention, when the terminal 1 accesses a RAN by using the first network device, the first network device allocates the C-RNTI to the terminal 1. The CC 1 as a PCC of the terminal 1 is to be aggregated with the CC 2 as an SCC of the terminal 1 for the terminal 1. Therefore, step 401 is triggered. In step 401, the C-RNTI may be carried in the request message, to request the second network device to allocate the C-RNTI to the terminal 1. The request message may be a message exchanged between the existing CC 1 and CC 2, for example, may be a message for requesting a resource from the PCC for the SCC, for example, a resource application message of user equipment on the SCC. In addition, the request message may also be a newly added message, and may include only the C-RNTI or may include another information element.

The second network device receives the request message sent by the first network device. The second network device may obtain the C-RNTI in the request message by parsing the request message. When the second network device finds that the C-RNTI is already allocated by the second network device to the terminal 2, the second network device may multiplex the C-RNTI for the terminal 1 and the terminal 2. To be specific, different from the prior art in which the C-RNTI is changed for the terminal 1 or the terminal 2, the C-RNTI is still allocated to the terminal 1, so that the terminal 1 and the terminal 2 use the same C-RNTI on the CC 2.

To avoid an error or a conflict in subsequent data transmission, the second network device staggers the communication resource used by the terminal 1 on the CC 2 and the communication resource used by the terminal 2 on the CC 2. Herein, a communication resource may be a time resource, a frequency resource, a spatial resource, or the like. In addition, the communication resource may be a combination of some of the resources, for example, a time-frequency resource. Herein, the resources may be staggered in a time domain, and/or staggered in a frequency domain, and/or staggered in space. This is not limited in this application.

In an implementation, the resources may be staggered in the time domain. For example, the second network device schedules the terminal 1 and the terminal 2 in different scheduling periods. Specifically, the second network device schedules the terminal 1 in a first scheduling period, and schedules the terminal 2 in a second scheduling period. The first scheduling period is different from the second scheduling period. To be specific, the second network device staggers, by using different scheduling periods, the scheduling periods of the terminal 1 and the terminal 2 that use the same C-RNTI. The terminal 1 and the terminal 2 may use resources on the CC 2 in different time periods. In this implementation, compared with the prior art, the C-RNTI of the terminal 1 or the terminal 2 does not need to be changed, so that a resulting problem of a service interruption is resolved. In addition, a resource can be properly used.

In another implementation, the second network device transmits data to the terminal 1 by using a first resource area, and transmits data to the terminal 2 by using a second resource area. The first resource area is different from the second resource area. To be specific, the second network device selects different resource areas from the CC 2, so that the terminal 1 and the terminal 2 use different resource areas. In this way, during communication between the terminal 1 and the terminal 2, a resource conflict is avoided. Compared with the prior art, the C-RNTI of the terminal 1 or the terminal 2 does not need to be changed, so that a resulting problem of a service interruption is resolved. In addition, a resource can be properly used. Herein, a resource area may include at least one physical resource block or physical resource block pair, and the first resource area and the second resource area include different physical resource blocks or physical resource block pairs.

Further, for example, in a same scheduling period, the second network device may divide a resource corresponding to the CC 2 into a plurality of resource areas based on the frequency domain, the time domain, or the frequency domain and the time domain. In an implementation, when the second device divides the resource corresponding to the CC 2 into a plurality of resource areas based on the frequency domain, the plurality of resource areas include the first resource area corresponding to a first frequency band, and the first resource area is allocated to the terminal 1. Actually, more than two terminals may use the same C-RNTI on the CC 2. Therefore, a quantity of resource areas into which the resource is divided in the frequency domain may be determined based on a quantity of terminals. To be specific, if N terminals use the same C-RNTI on the CC 2, the resource is divided into N resource areas.

A C-RNTI is used to scramble a control channel, for example, a PDCCH, and a terminal determines, based on the C-RNTI, that control information on the PDCCH is to be sent to the terminal. When the terminal 1 and the terminal 2 use the same C-RNTI, control channel confusion may occur. Therefore, in a preferred embodiment, the second network device instructs the first network device to start cross-carrier scheduling for the terminal 1. To be specific, control information of the terminal 1 on the CC 2 is sent on a control channel on the CC 1. For example, control information carried on a PDCCH is used to indicate a location of a resource on a PDSCH. A location of a resource on a PDSCH or a PUSCH on the CC 2 is indicated to the terminal 1 by using control information carried on a PDCCH on the CC 1, and a location of a resource on the PDSCH or the PUSCH on the CC 2 is indicated to the terminal 2 by using control information carried on a PDCCH on the CC 2. In this way, the terminal 1 and the terminal 2 can distinguish between their control information by using the carriers.

Referring to FIG. 5, FIG. 5 shows a basic principle of cross-carrier scheduling in an LTE system. A location of a resource on a PDSCH on a PCC, a location of a resource on a PUSCH on the PCC, a location of a resource on a PDSCH on an SCC, and a location of a resource on a PUSCH on the SCC may be indicated by using a PDCCH on the PCC.

Therefore, the method in this embodiment of the present invention may further include:
sending, by the second network device, a first notification message to the first network device, where the first notification message is used to instruct the first network device to start cross-carrier scheduling for the terminal 1. The cross-carrier scheduling includes: the first network device sends control information of the terminal 1 on the CC 2 to the terminal 1 on the control channel on the CC 1. In addition, herein, the starting cross-carrier scheduling for the terminal 1 means that the first network device can implement the cross-carrier scheduling on the terminal 1, which is a meaning of enabling.

The control information of the terminal 1 on the CC 2 includes information indicating a location of a data channel of the terminal 1 on the CC 2, for example, information indicating a location of a resource on a PDSCH of the terminal 1 on the CC 2.

Optionally, if in step 402, the second network device staggers the communication resources of the terminal 1 and the terminal 2 on the CC 2 by using different scheduling periods, the method in this embodiment of the present invention may further include:
sending, by the second network device, a first indication message to the first network device, where the first indication message is used to instruct the first network device to send control information of the terminal 1 on the CC 2 to the terminal 1 on a control channel on the CC 1. To be specific, the second network device instructs the first network device to schedule, by using the control channel on the CC 1, the terminal 1 to perform transmission on the CC 2 in the first period. The first indication message may be sent in real time: When the second network device allocates the first scheduling period to the terminal 1, sending of the first indication message is triggered. The transmission includes downlink data receiving and uplink data sending by the terminal 1. For example, a specific data transmission procedure may be as follows:

The second device sends data received from the first device to the terminal 1 by using a data channel on the CC 2; or the second device receives, by using a data channel on the CC 2, data sent by the terminal 1. Data transmission on the CC 2 and data transmission performed by the terminal 1 above both occur in the first scheduling period.

If in step 402, the second network device staggers the communication resources of the terminal 1 and the terminal 2 on the CC 2 by using different resource areas, the method in this embodiment of the present invention may further include:
sending, by the second network device, a second indication message to the first network device, where the second indication message is used to instruct the first network device to send control information of the terminal 1 on the CC 2 to the terminal 1 on a control channel on the CC 1, and includes information indicating the first resource area. In an implementation, if the second device divides the resource corresponding to the CC 2 into a plurality of resource areas based on the frequency domain, when the plurality of resource areas include the first resource area corresponding to the first frequency band, the information indicating the first resource area may be information indicating the first frequency band.

To be specific, the second network device requests the first network device to schedule, by using the control channel on the CC 1, the terminal 1 to perform transmission in the first resource area on the CC 2. The transmission includes downlink data receiving and uplink data sending by the terminal 1. For example, a specific data transmission procedure may be as follows:

The second device sends data received from the first device to the terminal 1 by using a data channel on the CC 2; or the second device receives, by using a data channel on the CC 2, data sent by the terminal 1. For the terminal 1, the data channel on the CC 2 is located in the first resource area.

The first network device receives the first indication message or the second indication message.

In this way, the first network device may learn of a period in which the terminal 1 can be scheduled on the CC 2 or may learn of an actually used resource area, and then send the control information to the terminal 1, so that the terminal 1 implements data transmission on the CC 2 in the corresponding scheduling period or in the corresponding resource area.

In an implementation, the first notification message may be used to notify the first network device of the same C-RNTI used by the terminal 1 and the terminal 2 on the CC 2, or a C-RNTI conflict between the terminal 1 and the terminal 2 on the CC 2. Certainly, the second network device may also send the second notification message to the first network device, to implement the foregoing function. Certainly, the second network device may provide, to the first network device by using the first notification message or the second notification message, a specific manner of staggering the communication resources used by the terminal 1 and the terminal 2 on the CC 2. The advantage is as follows: The first network device is notified of the solution to the conflict as soon as possible, and it is advantageous for the first network device to coordinate subsequent scheduling arrangement on the CC 1.

In the technical solutions provided in this embodiment of the present invention, when the CC 1 as a PCC is aggregated with the CC 2 as an SCC for a terminal, when a C-RNTI corresponding to the terminal is already occupied on the CC 2, the C-RNTI is multiplexed by the terminal and another terminal on the SCC, and communication resources of the terminal and the another terminal on the CC 2 are staggered. Different from the prior art, in the technical solutions, a C-RNTI does not need to be changed for a terminal, thereby avoiding poor user experience due to a service interruption.

The solutions provided in the embodiments of the present invention are mainly described from a perspective of interaction between various network devices and interaction between a network device and a terminal. It may be understood that, to implement the foregoing functions, the network device, the terminal, and the like include corresponding hardware structures and/or software modules for performing the functions. A person skilled in the art should be easily aware that, in combination with examples of units and algorithm steps described in the embodiments disclosed in this specification, the present invention can be implemented in a hardware form or a form of a combination of hardware and computer software. Whether a function is performed by hardware or by computer software driving hardware depends on particular applications and design constraint conditions of the technical solutions. A person skilled in the art may use different methods to implement the described functions for each particular application, but it should not be considered that the implementation goes beyond the scope of the present invention.

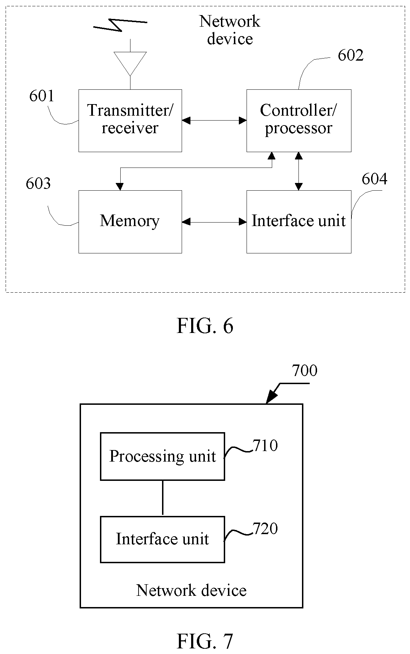

FIG. 6 is a possible schematic structural diagram of the network device in the foregoing embodiment.

The network device includes a transmitter/receiver 601, a controller/processor 602, a memory 603, and a communications unit 604. The transmitter/receiver 601 is configured to: support information receiving and sending between a network device and a terminal, and support radio communication between the terminal and another terminal. The controller/processor 602 performs various functions used for communication with another network device or a terminal. On an uplink, an uplink signal from the terminal is received by using an antenna, adjusted by the receiver 601, and further processed by the controller/processor 602, to restore service data and signaling information that are sent by the terminal. On a downlink, service data and a signaling message are processed by the controller/processor 602, and adjusted by the transmitter 601, to generate a downlink signal, and the downlink signal is transmitted to the terminal by using an antenna. The controller/processor 602 further performs a processing process of the first network device or the second network device in the method embodiment corresponding to FIG. 4 and/or another process used for a technology described in this application. The memory 603 is configured to store program code and data of the network device. The interface unit 604 is configured to support communication between the network device and another network device, for example, the interface unit 604 can implement communication by using an X2 interface or an S1 interface.

It may be understood that, FIG. 6 merely shows a simplified design of the network device. During actual application, the network device may include any quantity of transmitters, receivers, processors, controllers, memories, interface units, and the like, and network devices that can implement the present invention shall all fall within the protection scope of the present invention.

FIG. 7 shows a network device 700 provided in an embodiment of the present invention. The network device 700 may include a processing unit 710 and an interface unit 720. The processing unit 710 can implement a function of the controller/processor 602 in the first network device or the second network device in FIG. 6, and the interface unit 720 can implement a function of the interface unit 604 in the network device in FIG. 6.

A person skilled in the art can further understood that, the various illustrative logical blocks (illustrative logical block) and the steps (step) listed in the embodiments of the present invention may be implemented through electronic hardware, computer software, or a combination of the two. To clearly display the interchangeability (interchangeability) between the hardware and the software, functions of the foregoing various illustrative components (illustrative components) and steps have been generally described. Whether the functions are implemented by using hardware or software depends on particular applications and a design requirement of the entire system. For each specific application, a person skilled in the art may use various methods to implement the functions. However, this implementation should not be understood to go beyond the protection scope of the embodiments of the present invention.

The various illustrative logical blocks, modules, and circuits described in the embodiments of the present invention may implement or operate the described functions by using a general processing unit, a digital signal processing unit, an application-specific integrated circuit (ASIC), a field programmable gate array (FPGA) or another programmable logical apparatus, a discrete gate or transistor logic, a discrete hardware component, or a design of any combination thereof. The general processing unit may be a micro processing unit. Optionally, the general processing unit may be any conventional processing unit, controller, microcontroller, or state machine. The processing unit may also be implemented by a combination of computing apparatuses, such as a digital signal processing unit and a micro processing unit, a plurality of micro processing units, one or more micro processing units with a digital signal processing unit core, or any other similar configuration.

Steps of the methods or algorithms described in the embodiments of the present invention may be directly embedded into hardware, a software module executed by a processing unit, or a combination thereof. The software module may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may connect to a processing unit so that the processing unit may read information from the storage medium and write information to the storage medium. Optionally, the storage medium may further be integrated into a processing unit. The processing unit and the storage medium may be configured in an ASIC, and the ASIC may be configured in a user terminal. Optionally, the processing unit and the storage medium may also be configured in different components of the user terminal.

In one or more examples of designs, the functions described in the embodiments of the present invention may be implemented by using hardware, software, firmware, or any combination thereof. If the present invention is implemented by software, these functions may be stored in a computer-readable medium or are transmitted to the computer-readable medium in a form of one or more instructions or code. The computer-readable medium is either a computer storage medium or a communications medium that enables a computer program to move from one place to another. The storage medium may be an available medium that may be accessed by any general or special computer. For example, such a computer-readable medium may include but is not limited to a RAM, a ROM, an EEPROM, a CD-ROM, or another optical disc storage, a disk storage or another magnetic storage apparatus, or any other medium that may be used to bear or store program code, where the program code is in a form of an instruction or a data structure or in a form that can be read by a general or special computer or a general or special processing unit. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in a defined computer-readable medium. The disc (disk) and the disk (disc) include a compressed disk, a laser disk, an optical disc, a DVD, a floppy disk, and a Bluray disc. The disk generally copies data by a magnetic means, and the disc generally copies data optically by a laser means. The foregoing combination may also be included in the computer-readable medium.

According to the foregoing description of this specification in the present invention, technologies in the art may use or implement the content of the present invention. Any modification based on the disclosed content shall be considered obvious in the art. The basic principles described in the present invention may be applied to other variations without departing from the essence and scope of the present invention. Therefore, the content disclosed in the present invention is not limited to the described embodiments and designs but may also be extended to a maximum scope that is consistent with the principles and disclosed new features of the present invention.

## Claims

1. An identifier management method, wherein the method is applied to a multi-carrier communications system, the multi-carrier communications system comprises a first carrier and a second carrier; a first terminal accesses a wireless network by using a first network device in which the first carrier is located, and is allocated with a radio network temporary identifier C-RNTI; and the method comprises:
receiving, by a second network device in which the second carrier is located, a request message sent by the first network device, wherein the request message is used to request the second network device to allocate the C-RNTI to the first terminal; and
when the C-RNTI is allocated by the second network device to a second terminal, allocating, by the second network device, the C-RNTI which is the same as the C-RNTI of the second terminal to the first terminal, and staggering a communication resource used by the first terminal on the second carrier and a communication resource used by the second terminal on the second carrier.

2. The method according to claim 1, wherein the method further comprises:
sending, by the second network device, a first notification message to the first network device, wherein the first notification message is used to instruct the first network device to start cross-carrier scheduling for the first terminal, and the cross-carrier scheduling comprises: the first network device sends the first terminal's control information of the second carrier to the first terminal on a control channel of the first carrier.

3. The method according to claim 2, wherein the first terminal's control information of the the second carrier comprises information indicating the first terminal a location of a data channel of the second carrier.

4. The method according to any one of claims 1 to 3, wherein the staggering, by the second network device, a communication resource used by the first terminal on the second carrier and a communication resource used by the second terminal on the second carrier comprises:
scheduling, by the second network device, the first terminal in a first scheduling period, and scheduling the second terminal in a second scheduling period, wherein the first scheduling period is different from the second scheduling period.

5. The method according to claim 4, wherein after the staggering, by the second network device, a communication resource used by the first terminal on the second carrier and a communication resource used by the second terminal on the second carrier, the method further comprises:
sending, by the second network device, a first indication message to the first network device, wherein the first indication message is used to instruct the first network device to send the first terminal's control information of the second carrier to the first terminal on the control channel of the first carrier.

6. The method according to any one of claims 1 to 3, wherein the staggering, by the second network device, a communication resource used by the first terminal on the second carrier and a communication resource used by the second terminal on the second carrier comprises:
transmitting, by the second network device, data to the first terminal by using a first resource area, and transmitting data to the second terminal by using a second resource area, wherein the first resource area is different from the second resource area.

7. The method according to claim 6, wherein the method further comprises:
sending, by the second network device, a second indication message to the first network device, wherein the second indication message is used to instruct the first network device to send the first terminal's control information of the second carrier to the first terminal on the control channel of the first carrier, and comprises information indicating the first resource area.

8. The method according to any one of claims 2 to 7, wherein
the first notification message is further used to notify the C-RNTI used by the first terminal and the second terminal; or the method further comprises:
sending, by the second network device, a second notification message to the first network device, wherein the second notification message is used to notify the C-RNTI used by the first terminal and the second terminal.

9. An identifier management method, wherein the method is applied to a multi-carrier communications system, the multi-carrier communications system comprises a first carrier and a second carrier; a first terminal accesses a wireless network by using a first network device in which the first carrier is located, and is allocated with a radio network temporary identifier C-RNTI; and the method comprises:
sending, by a first network device, a request message to a second network device in which a second carrier is located, wherein the request message is used to request the second network device to allocate the C-RNTI to the first terminal; and
when the first terminal uses the C-RNTI which is the same as a second terminal on the second carrier, receiving, by the first network device, an indication message sent by the second network device, wherein the indication message is used to instruct the first network device to send the first terminal's control information of the second carrier to the first terminal on a control channel of the first carrier, and a communication resource used by the first terminal on the second carrier and a communication resource used by the second terminal on the second carrier are staggered.

10. The method according to claim 9, wherein the method further comprises:
receiving, by the first network device, a notification message sent by the second network device, wherein the notification message is used to instruct the first network device to start cross-carrier scheduling for the first terminal, and the cross-carrier scheduling comprises: the first network device sends the first terminal's control information of the second carrier to the first terminal on the control channel of the first carrier.

11. The method according to claim 10, wherein the first terminal's control information of the second carrier comprises information indicating the first terminal a location of a data channel of the second carrier.

12. The method according to any one of claims 9 to 11, wherein that a communication resource used by the first terminal on the second carrier and a communication resource used by the second terminal on the second carrier are staggered comprises: a scheduling period of the first terminal is different from a scheduling period of the second terminal.

13. The method according to any one of claims 9 to 11, wherein that a communication resource used by the first terminal on the second carrier and a communication resource used by the second terminal on the second carrier are staggered comprises: a resource area used by the first terminal is different from a resource area used by the second terminal.

14. A second network device, wherein the second network device is applied to a multi-carrier communications system, the multi-carrier communications system comprises a first carrier and a second carrier; the second network device is a network device in which the second carrier is located; a first terminal accesses a wireless network by using a first network device in which the first carrier is located, and is allocated with a radio network temporary identifier C-RNTI; and the second network device comprises:
an interface unit, configured to receive a request message sent by the first network device, wherein the request message is used to request the second network device to allocate the C-RNTI to the first terminal; and
a processing unit, configured to: when the C-RNTI is allocated by the second network device to a second terminal, allocate the C-RNTI which is the same as the C-RNTI of the second terminal to the first terminal, and stagger a communication resource used by the first terminal on the second carrier and a communication resource used by the second terminal on the second carrier.

15. The second network device according to claim 14, wherein the interface unit is further configured to send a first notification message to the first network device, wherein the first notification message is used to instruct the first network device to start cross-carrier scheduling for the first terminal, and the cross-carrier scheduling comprises: the first network device sends the first terminal's control information of the second carrier to the first terminal on a control channel of the first carrier.

16. The second network device according to claim 15, wherein the first terminal's control information of the second carrier comprises information indicating the first terminal a location of a data channel of the second carrier.

17. The second network device according to any one of claims 14 to 16, wherein that a processing unit is configured to: allocate the C-RNTI the same as the C-RNTI of the second terminal to the first terminal, and stagger a communication resource used by the first terminal on the second carrier and a communication resource used by the second terminal on the second carrier comprises: scheduling the first terminal in a first scheduling period, and scheduling the second terminal in a second scheduling period, wherein the first scheduling period is different from the second scheduling period.

18. The second network device according to claim 17, wherein after the processing unit staggers the communication resource used by the first terminal on the second carrier and the communication resource used by the second terminal on the second carrier, the interface unit is further configured to send a first indication message to the first network device, wherein the first indication message is used to instruct the first network device to send the first terminal's control information of the second carrier to the first terminal on the control channel of the first carrier.

19. The second network device according to any one of claims 14 to 16, wherein that a processing unit is configured to: allocate the C-RNTI the same as the C-RNTI of the second terminal to the first terminal, and stagger a communication resource used by the first terminal on the second carrier and a communication resource used by the second terminal on the second carrier comprises: transmitting data to the first terminal by using a first resource area, and transmitting data to the second terminal by using a second resource area, wherein the first resource area is different from the second resource area.

20. The second network device according to claim 19, wherein the interface unit is further configured to send a second indication message to the first network device, wherein the second indication message is used to instruct the first network device to send the first terminal's control information of the second carrier to the first terminal on the control channel of the first carrier, and comprises information indicating the first resource area.

21. The second network device according to claims 15 to 20, wherein
the first notification message is further used to notify the C-RNTI used by the first terminal and the second terminal; or
the interface unit is further configured to send a second notification message to the first network device, wherein the second notification message is used to notify the C-RNTI used by the first terminal and the second terminal.

22. A first network device, wherein the first network device is applied to a multi-carrier communications system, the multi-carrier communications system comprises a first carrier and a second carrier; a first terminal accesses a wireless network by using the first network device in which the first carrier is located; and the first network device comprises:
a processing unit, configured to allocate a radio network temporary identifier C-RNTI to the first terminal; and
an interface unit, configured to send a request message to a second network device in which the second carrier is located, wherein the request message is used to request the second network device to allocate the C-RNTI to the first terminal; and
when the first terminal uses the C-RNTI which is the same as a second terminal on the second carrier, the interface unit is further configured to receive an indication message sent by the second network device, wherein the indication message is used to instruct the first network device to send the first terminal's control information of the second carrier to the first terminal on a control channel of the first carrier, and a communication resource used by the first terminal on the second carrier and a communication resource used by the second terminal on the second carrier are staggered.

23. The first network device according to claim 22, wherein the interface unit is further configured to receive a notification message sent by the second network device, wherein the notification message is used to instruct the first network device to start cross-carrier scheduling for the first terminal, and the cross-carrier scheduling comprises: the first network device sends the the first terminal's control information of the second carrier to the first terminal on the control channel of the first carrier.

24. The first network device according to claim 23, wherein the first terminal's control information of the second carrier comprises information indicating the first terminal a location of a data channel of the second carrier.

25. The first network device according to any one of claims 22 to 24, wherein that a communication resource used by the first terminal on the second carrier and a communication resource used by the second terminal on the second carrier are staggered specifically comprises: a scheduling period of the first terminal is different from a scheduling period of the second terminal.

26. The first network device according to any one of claims 22 to 24, wherein that a communication resource used by the first terminal on the second carrier and a communication resource used by the second terminal on the second carrier are staggered specifically comprises: a resource area used by the first terminal is different from a resource area used by the second terminal.
